(19) Europäisches Patentamt / European Patent Office / Office européen des brevets

(11) **EP 3 935 348 B1**

(12) **FASCICULE DE BREVET EUROPEEN**

(45) Date de publication et mention de la délivrance du brevet:
**10.07.2024 Bulletin 2024/28**

(21) Numéro de dépôt: **20712820.8**

(22) Date de dépôt: **05.03.2020**

(51) Classification Internationale des Brevets (IPC):
**G01F 1/696** *(2006.01)*   **G01F 1/684** *(2006.01)*
**G01F 1/688** *(2006.01)*   **G01F 15/18** *(2006.01)*

(52) Classification Coopérative des Brevets (CPC):
**G01F 1/696; G01F 1/684; G01F 1/6888; G01F 15/18**

(86) Numéro de dépôt international:
**PCT/EP2020/055930**

(87) Numéro de publication internationale:
**WO 2020/178403 (10.09.2020 Gazette 2020/37)**

(54) **SYSTÈME ET MÉTHODE DE DÉTECTION D'UN FLUX DE PRODUIT FLUIDE OU PÂTEUX PAR THERMISTANCE ET CIRCUIT DE LUBRIFICATION EN GRAISSE ASSOCIÉ**

SYSTEM UND VERFAHREN ZUR ERFASSUNG EINER STRÖMUNG EINES FLÜSSIGEN ODER PASTÖSEN PRODUKTES MITTELS EINES THERMISTORS UND ZUGEHÖRIGEN SCHMIERKREISES

SYSTEM AND METHOD FOR DETECTING A FLOW OF A FLUID OR PASTY PRODUCT USING A THERMISTOR AND ASSOCIATED GREASE LUBRICATION CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2019 FR 1902251**

(43) Date de publication de la demande:
**12.01.2022 Bulletin 2022/02**

(73) Titulaire: **NTN Europe**
**74000 Annecy (FR)**

(72) Inventeurs:
• **PILLIAS, Benoît**
**B2017 74010 Annecy (FR)**
• **POLLIER, Vivien**
**74650 CHAVANOD (FR)**

(74) Mandataire: **Alatis**
**3, rue Paul Escudier**
**75009 Paris (FR)**

(56) Documents cités:
JP-A- H04 125 422    US-A- 4 413 514
US-A- 4 756 670    US-A1- 2012 232 809

**Description**

**DOMAINE TECHNIQUE DE L'INVENTION**

L'invention se rapporte à la détection d'un flux de produit fluide ou pâteux, et de façon non exclusive à un détecteur de lubrification, destiné à être placé dans un circuit de lubrification d'un ou plusieurs composants à lubrifier, et notamment dans un circuit de lubrification destiné à alimenter en lubrifiant les composants à lubrifier de façon intermittente. Elle est particulièrement adaptée à un circuit de lubrification destiné à alimenter en graisse des composants à lubrifier.

**ÉTAT DE LA TECHNIQUE ANTÉRIEURE**

Certains composants d'installations industrielles, de machines ou de véhicules nécessitent une lubrification en graisse. Une telle lubrification est réalisée de façon intermittente, par exemple à intervalles réguliers ou bien en fonction de paramètres d'utilisation du composant (durée d'utilisation, température...) ou de paramètres environnementaux (température ambiante). Elle peut être réalisée par une intervention manuelle locale d'un opérateur de maintenance injectant de la graisse dans le composant, ou de façon distante et le cas échéant automatisée, par l'intermédiaire d'un circuit de lubrification, dans lequel peut circuler de la graisse depuis un réservoir jusqu'au composant à lubrifier.

Un tel circuit nécessite des détecteurs pour déterminer si le passage de fluide, en l'occurrence le passage de graisse, vers le composant à lubrifier, a bien eu lieu. Les causes de dysfonctionnement de la lubrification peuvent en effet être nombreuses : rupture du conduit de graissage, bouchon dans le circuit, panne de pompe, erreur humaine, etc... Les solutions couramment retenues pour détecter un passage de graisse mettent en oeuvre une pièce mobile dans le conduit de circulation de la graisse, cette pièce mobile étant rappelée vers une position de repos par un ressort, et entraînée par la graisse vers une position active au moment de l'écoulement, le déplacement de cette pièce étant détecté par tout moyen approprié, et notamment par détection électromagnétique. Mais des dispositions doivent alors être prises pour parfaitement contrôler le mouvement de la pièce mobile, et notamment son retour à la position de repos, quel que soit l'état de la graisse, produit pâteux dont les propriétés mécaniques sont fortement variables avec la température. Ces dispositions amènent à une sophistication qui rend onéreux les détecteurs utilisant le déplacement d'une pièce dans le flux de graisse.

On connaît par ailleurs des systèmes de mesure d'un flux de produit fluide, comportant un ou plusieurs sondes de mesure statiques, c'est-à-dire sans pièce en mouvement, disposées dans un conduit de passage du produit fluide. Il a été ainsi proposé, dans le document US2017/0254686, de positionner au moins une thermistance de mesure dans un conduit. La thermistance de mesure est fixée sur une plaque de circuit imprimé positionnée à l'intérieur d'une sonde métallique ayant la forme générale d'une vis creuse, pourvue d'un filetage, qui est introduite dans le conduit par un trou radial également fileté. Le positionnement du thermistor, et notamment son orientation par rapport à l'axe de l'écoulement du fluide dans le conduit, est toutefois difficile à maîtriser avec une fixation par vissage. Le volume intérieur cylindrique offert par une sonde devant être vissée dans le trou radial du conduit est faible et impose une miniaturisation importante des composants électroniques. US4413514-A décrit un capteur de vitesse de fluide enfermé dans un boîtier venturi destiné à être disposé dans un flux de fluide en mouvement. Une thermistance auto-chauffante à coefficient négatif est supportée à l'intérieur du boîtier pour détecter les changements de vitesse du flux. Une thermistance à coefficient positif est supportée à l'extérieur du boîtier et compense les fluctuations de la température de l'air ambiant.

**EXPOSÉ DE L'INVENTION**

L'invention vise à remédier aux inconvénients de l'état de la technique et à proposer une détection d'un flux de produit fluide ou pâteux, notamment un flux de graisse, qui s'affranchisse de pièces mobiles et soit facile à industrialiser.

Pour ce faire est proposé, selon un premier aspect de l'invention, un système de détection d'un flux de produit fluide ou pâteux, comportant : un corps rigide dans lequel est formé un conduit tubulaire de passage du flux de produit fluide ou pâteux, délimitant un milieu ambiant de mesure, et un transducteur de mesure statique apte à capter et convertir en signal électrique des variations d'une grandeur physique variant au passage du flux de produit fluide ou pâteux, le transducteur statique étant positionné dans le conduit. Le corps comporte deux tronçons séparés, chacun des deux tronçons formant une portion tubulaire du conduit tubulaire, les deux tronçons étant fixés l'un à l'autre. Le système de détection comportant un support supportant le transducteur de mesure et positionné entre les deux tronçons. Le positionnement du support entre les deux tronçons permet une maîtrise de la position, et notamment de l'orientation de la thermistance de mesure, dans le conduit.

Suivant un mode de réalisation particulièrement avantageux, le support est une plaque. Les surfaces de référence pour le positionnement relatif du support et des deux tronçons du corps sont planes. Suivant un mode de réalisation, le support est une carte de circuit imprimé. Le support a donc une double fonction mécanique et électrique.

Suivant un mode de réalisation, le support comporte au moins une lumière de passage positionnée dans le conduit pour permettre le flux de produit fluide ou pâteux. De préférence, on prévoit au moins deux lumières de passage entre lesquelles est positionnée la thermistance de mesure, de sorte que la thermistance de mesure soit positionnée de façon centrale dans le flux de produit fluide ou pâteux.

Suivant un mode de réalisation, le système de détection comporte en outre un ensemble d'un ou plusieurs joints d'étanchéité positionnés entre le support et chacun des deux tronçons du corps . De préférence, l'ensemble d'un ou plusieurs joints d'étanchéité comporte au moins un joint annulaire entourant le conduit tubulaire, et de préférence au moins deux joints annulaires entourant le conduit tubulaire, un des deux joints annulaires étant positionné entre chacun des deux tronçons du corps et le support, les deux joints annulaires ayant de préférence des dimensions ou des rigidités différentes. Le ou les joints annulaires peuvent être des joints toriques. Suivant un mode de réalisation, l'ensemble d'un ou plusieurs joints d'étanchéité comporte au moins un premier joint d'appui, pincé entre le support et un premier des deux tronçons, le support n'ayant pas de contact direct avec le premier des deux tronçons. L'écrasement du joint d'appui permet d'assurer l'étanchéité, alors qu'un jeu fonctionnel est ménagé entre le support et le premier tronçon. De préférence, le support comporte au moins une gorge annulaire de positionnement entourant le joint d'appui et dans laquelle pénètre une portion d'extrémité annulaire du premier des deux tronçons. La portion annulaire d'extrémité du premier des deux tronçons et la gorge annulaire de positionnement forment ensemble une chicane qui s'oppose à une migration du joint d'appui sous l'effet de la pression régnant dans le conduit, et contribue le cas échéant au maintien du support.

De préférence, l'ensemble d'un ou plusieurs joints d'étanchéité comporte au moins un deuxième joint d'appui, pincé entre le support et un deuxième des deux tronçons, le support n'ayant pas de contact direct avec le deuxième des deux tronçons. Le jeu fonctionnel de montage entre le support et les deux tronçons est alors réparti entre le support et chacun des deux tronçons.

Alternativement, on peut prévoir que le support est en appui direct contre le deuxième des deux tronçons. Le jeu fonctionnel de montage est alors constitué entre le support et le premier des deux tronçons.

Suivant un mode de réalisation, le système de détection comporte en outre une pièce intermédiaire guidée en translation par rapport au corps parallèlement à un axe du conduit tubulaire, la pièce intermédiaire étant disposée entre un joint de l'ensemble d'un ou plusieurs joints d'étanchéité et l'un des tronçons du corps, ledit joint étant en appui contre le support, la pièce intermédiaire étant mise en appui contre le joint par un élément élastique, le support étant au contact de la pièce intermédiaire et de l'autre des tronçons du corps. Le jeu fonctionnel de montage est alors absorbé par le mouvement de la pièce intermédiaire, l'élément élastique assurant une pression de maintien maîtrisée sur le support.

En pratique, on peut prévoir qu'au moins un des deux tronçons du corps comporte au moins une portée radiale de maintien d'un joint de l'ensemble d'un ou plusieurs joints d'étanchéité; une telle portée est destinée à empêcher un échappement du joint sous l'effet de la pression régnant dans le conduit.

Suivant un mode de réalisation, le transducteur de mesure statique est un transducteur thermoélectrique de mesure, de préférence une thermistance de mesure.

Dans la mesure où les variations de température observées dans le conduit peuvent être liées au passage d'un flux de produit fluide ou pâteux, mais également à une variation de la température ambiante, on prévoit le support est positionné de manière telle qu'une partie intérieure du support est positionnée dans le conduit et supporte le transducteur de mesure et qu'une partie extérieure du support est située hors du conduit, et en ce qu'il comporte en outre un transducteur thermoélectrique de compensation positionné dans un milieu ambiant de référence à l'extérieur du conduit et supporté par la partie extérieure du support. Le cas échéant, la partie intérieure du support peut comporter un amincissement localisé au niveau du transducteur de mesure, pour minimiser l'inertie thermique. De préférence, le système de détection comporte en outre un circuit électronique de mesure intégrant le transducteur thermoélectrique de mesure et le transducteur thermoélectrique de compensation. Le transducteur thermoélectrique de compensation est ainsi à même de suivre les variations de la température ambiante d'un milieu de référence, ce qui permet par un traitement judicieux des signaux de discriminer les variations du signal électrique du transducteur thermoélectrique de mesure qui sont liées au passage du produit fluide ou pâteux ce celles qui sont liées aux fluctuations de la température ambiante. De préférence, le corps comporte une cavité de logement du transducteur thermoélectrique de compensation, sans communication fluidique avec le conduit, et constituant le milieu ambiant de référence, la cavité de logement étant de préférence fermée.

Le système de détection est particulièrement adapté à une graisse et à un conduit de graissage apte à être intégré à un circuit de lubrification en graisse d'un ensemble d'un ou plusieurs composants mécaniques d'une installation industrielle, d'une ou plusieurs machines ou d'un véhicule.

Suivant un autre aspect de l'invention, celle-ci a trait à un circuit de lubrification en graisse d'un ensemble d'un ou plusieurs composants d'une installation industrielle, d'une ou plusieurs machines ou d'un véhicule, comportant un système de détection tel que décrit précédemment, le conduit de graissage du système de détection étant intégré au circuit de lubrification en graisse.

Suivant un autre aspect de l'invention, est proposé un système de détection d'un flux de produit fluide ou pâteux, comportant :

- une thermistance de mesure ayant un coefficient de température négatif, la thermistance de mesure étant apte à être positionnée dans un milieu ambiant de mesure ayant une température ambiante donnée et à présenter, par rapport au milieu ambiant de mesure, une résistance thermique qui varie en fonction de la présence ou de l'absence d'un flux de produit fluide ou pâteux dans le milieu ambiant de mesure,

- un circuit de détection de variations temporelles d'une différence de potentiel de mesure entre une borne de la thermistance de mesure et un potentiel de référence, et

- un circuit d'alimentation de la thermistance de mesure régulé en courant, piloté par un dipôle électrique de compensation comportant une ou plusieurs thermistances de compensation ayant un coefficient de température négatif identique branchées en série ou en parallèle, la ou les thermistances de compensation étant aptes à être positionnées dans un milieu ambiant de référence à la température ambiante donnée, de manière à délivrer un courant d'alimentation de la thermistance de mesure ayant une intensité qui est inversement proportionnelle à la résistance du dipôle électrique de compensation.

La puissance dissipée dans la thermistance de mesure peut être exprimée comme une puissance électrique fonction de la résistance électrique de la thermistance de mesure. Elle peut également être exprimée comme une puissance thermique fonction de la résistance thermique entre la thermistance de mesure et le milieu ambiant. Ainsi, les variations de résistance thermique lors des variations du flux de produit fluide ou pâteux se traduisent par des variations de tension électrique aux bornes de la thermistance de mesure. Mais la résistance électrique d'une thermistance varie exponentiellement avec l'inverse de la température ambiante. Utiliser une thermistance de mesure sans compensation thermique n'est donc pas réalisable en pratique, car la sensibilité de la mesure diminue fortement lorsque la température augmente.

La compensation selon l'invention vise à moduler le courant d'alimentation de la thermistance de mesure en vue de stabiliser en fonction de la température la différence de potentiel entre la borne de la thermistance de mesure et le potentiel de référence. En choisissant un circuit d'alimentation piloté par une ou plusieurs thermistances de compensation, on réalise cette compensation de manière particulièrement simple.

De préférence, le coefficient de température négatif de la thermistance de mesure et le coefficient de température négatif de la ou les thermistances de compensation sont appariés de manière telle que, dans une plage de la température ambiante $T_{amb}$ donnée comprise entre -40°C et 105 °C, la différence entre la tension de mesure $V_M(T_{amb})_{stat}$ constatée pour une première valeur $\rho_{Mstat}$ de la résistance thermique et la tension de mesure $V_M(T_{amb})_{dyn}$ constatée pour une deuxième valeur de la résistance thermique $\rho_{Mdyn}$ comprise entre 20% et 90% de la première valeur $\rho_{Mstat}$ de la résistance thermique, est en valeur absolue comprise entre 50% et 150% de la différence entre la tension de mesure $V_M(300K)_{stat}$ constatée à 25°C pour la première valeur $\rho_{Mstat}$ de la résistance thermique et la tension de mesure $V_M(300K)_{dyn}$ constatée à 25°C pour la deuxième valeur de la résistance thermique $\rho_{Mdyn}$. En particulier, cette performance peut être obtenue lorsque le coefficient de température négatif $\beta_M$ de la thermistance de mesure et le coefficient de température négatif $\beta_C$ de la ou les thermistances de compensation sont appariés de telle sorte que :

$$0{,}65 \leq \frac{\beta_C}{\beta_M} \leq 0{,}85$$

De préférence :

$$\frac{\beta_C}{\beta_M} \leq 0{,}8$$

De préférence :

$$0{,}7 \leq \frac{\beta_C}{\beta_M}$$

Suivant un mode de réalisation de l'invention, le circuit de détection de variations d'une différence de potentiel de mesure entre une borne de la thermistance de mesure et un potentiel de référence est un circuit différentiateur, de préférence de premier ordre

Pour une mise en oeuvre pratique, on peut notamment prévoir en outre un circuit auxiliaire d'amplification de la différence de potentiel de mesure, comportant au moins une thermistance d'amplification ayant un coefficient de température négatif, la thermistance d'amplification étant apte à être positionnée dans le milieu ambiant de référence, le circuit auxiliaire d'amplification ayant un rapport d'amplification variant linéairement en fonction de la résistance de la thermistance d'amplification.

Suivant un mode de réalisation, le système de détection comporte en outre un conduit de passage du flux de produit fluide ou pâteux, délimitant le milieu ambiant de mesure dans lequel est positionnée la thermistance de mesure, et un support extérieur au conduit, sur lequel est positionnée la thermistance de compensation, le support extérieur étant couplé thermiquement au conduit. De préférence, le produit fluide ou pâteux est une graisse, et le conduit est un conduit de graissage apte à être intégré à un circuit de lubrification en graisse d'un ensemble d'un ou plusieurs composants mécaniques d'une installation industrielle, d'une ou plusieurs machines, ou d'un ou plusieurs organes de véhicule

Suivant un autre aspect de l'invention, celle-ci a trait à un circuit de lubrification en graisse d'un ensemble d'un ou plusieurs composants d'une installation industrielle, d'une ou plusieurs machines, ou d'un ou plusieurs organes de véhicule, comportant un système de détection tel que décrit précédemment, le conduit de graissage du système de détection étant intégré au circuit de lubrification en graisse.

Suivant un autre aspect de l'invention, celle-ci a trait à une méthode de détection d'un flux de produit fluide ou pâteux, comportant :

- un positionnement d'une thermistance de mesure ayant un coefficient de température négatif, dans un milieu ambiant de mesure ayant une température ambiante donnée, la thermistance de mesure étant apte à présenter, par rapport au milieu ambiant de mesure, une résistance thermique qui varie en fonction de la présence ou de l'absence d'un flux de produit fluide ou pâteux dans le milieu ambiant de mesure, et

- une mesure d'une variation temporelle d'une différence de potentiel de mesure entre une borne de la thermistance de mesure et un potentiel de référence,

- un positionnement d'un dipôle électrique comportant une ou plusieurs thermistances de compensation ayant un coefficient de température négatif identique branchées en série ou en parallèle, dans un milieu ambiant de référence à la température ambiante donnée, et

- une alimentation de la thermistance de mesure par un courant d'alimentation régulé ayant une intensité qui est inversement proportionnelle à la résistance électrique du dipôle de compensation.

De préférence, le coefficient de température négatif de la thermistance de mesure et le coefficient de température négatif de la ou les thermistances de compensation sont appariés de manière telle que dans une plage de la température ambiante $T_{amb}$ donnée comprise entre -40°C et 105 °C, la différence entre la tension de mesure $V_M(T_{amb})_{stat}$ constatée pour une première valeur $\rho_{Mstat}$ de la résistance thermique et la tension de mesure $V_M(T_{amb})_{dyn}$ constatée pour une deuxième valeur de la résistance thermique $\rho_{Mdyn}$ comprise entre 20% et 90% de la première valeur $\rho_{Mstat}$ de la résistance thermique, est en valeur absolue comprise entre 50% et 150% de la différence entre la tension de mesure $V_M(300K)_{stat}$ constatée à 25°C pour la première valeur $\rho_{Mstat}$ de la résistance thermique et la tension de mesure $V_M(300K)_{dyn}$ constatée à 25°C pour la deuxième valeur de la résistance thermique $\rho_{Mdyn}$. En particulier, cette performance peut être obtenue lorsque le coefficient de température négatif $\beta_M$ de la thermistance de mesure et le coefficient de température négatif $\beta_C$ de la ou les thermistances de compensation sont appariés de telle sorte que :

$$0,65 \leq \frac{\beta_C}{\beta_M} \leq 0,85$$

De préférence :

$$\frac{\beta_C}{\beta_M} \leq 0,8$$

De préférence :

$$0,7 \leq \frac{\beta_C}{\beta_M}$$

Suivant un mode de réalisation de l'invention, la méthode comporte en outre une amplification de la différence de potentiel de mesure avec un rapport d'amplification variant linéairement en fonction de la résistance d'au moins une thermistance d'amplification positionnée dans le milieu ambiant de référence.

Pour une mise en oeuvre pratique, on peut notamment prévoir que le milieu ambiant de mesure est délimité par un conduit de passage du flux de produit fluide ou pâteux, le positionnement de la thermistance de mesure étant fait dans le conduit, le positionnement de la ou les thermistances de compensation étant fait sur un support extérieur au conduit et couplé thermiquement au conduit. De préférence, le produit fluide ou pâteux est une graisse, et le conduit est un conduit de graissage intégré à un circuit de lubrification en graisse d'un ensemble d'un ou plusieurs composants d'une installation industrielle, d'une ou plusieurs machines ou d'un ou plusieurs organes de véhicule.

Suivant un autre aspect de l'invention, celle-ci a trait à Méthode de lubrification en graisse d'un ensemble d'un ou plusieurs composants d'une installation industrielle, d'une ou plusieurs machines ou d'un ou plusieurs organes de véhicule, dans laquelle on détecte un passage de graisse dans un conduit de graissage d'un circuit de lubrification de l'ensemble d'un ou plusieurs composants par la méthode de détection précédemment décrite.

## BRÈVE DESCRIPTION DES FIGURES

D'autres caractéristiques et avantages de l'invention ressortiront à la lecture de la description qui suit, en référence aux figures annexées, qui illustrent :

[Fig. 1], un schéma simplifié d'un circuit de lubrification en graisse d'un ensemble de composants mécaniques ;

[Fig. 2], une vue en coupe d'un système de détection de passage de graisse intégré au circuit de lubrification de la figure 1.

[Fig. 3], une vue en coupe d'un détail du système de détection de passage de graisse de la figure 2 ;

[Fig. 4], une vue éclatée du système de détection de passage de graisse de la figure 2 ;

[Fig. 5], une vue en coupe d'un détail d'un système de détection de passage de graisse suivant un deuxième mode de réalisation de l'invention, intégré au circuit de lubrification de la figure 1 ;

[Fig. 6], une vue en coupe d'un détail d'un système de détection de passage de graisse suivant un troisième mode de réalisation de l'invention, intégré au circuit de lubrification de la figure 1 ;

[Fig. 7], une vue en coupe d'un détail d'un système de détection de passage de graisse suivant un quatrième mode de réalisation de l'invention, intégré au circuit de lubrification de la figure 1 ;

[Fig. 8], une vue en coupe d'un détail d'un système de détection de passage de graisse suivant un cinquième mode de réalisation de l'invention, intégré au circuit de lubrification de la figure 1 ;

[Fig. 9], un schéma simplifié d'un premier mode de réalisation d'un circuit électronique du système de détection de passage de graisse de la figure 2 ;

[Fig. 10], un graphe illustrant en abscisse la température ambiante et en ordonnée les variations de la tension aux bornes d'une résistance de mesure du circuit électronique de la figure 9 ;

[Fig. 11], un schéma simplifié d'un circuit d'amplification pouvant être optionnellement ajouté au circuit électronique de la figure 9 ;

[Fig. 12], un schéma simplifié d'un deuxième mode de réalisation d'un circuit électronique du système de détection de passage de graisse de la figure 2 ;

[Fig. 13], un schéma simplifié d'un troisième mode de réalisation d'un circuit électronique du système de détection de passage de graisse de la figure 2.

Pour plus de clarté, les éléments identiques ou similaires sont repérés par des signes de référence identiques sur l'ensemble des figures.

## DESCRIPTION DÉTAILLÉE DE MODES DE RÉALISATION

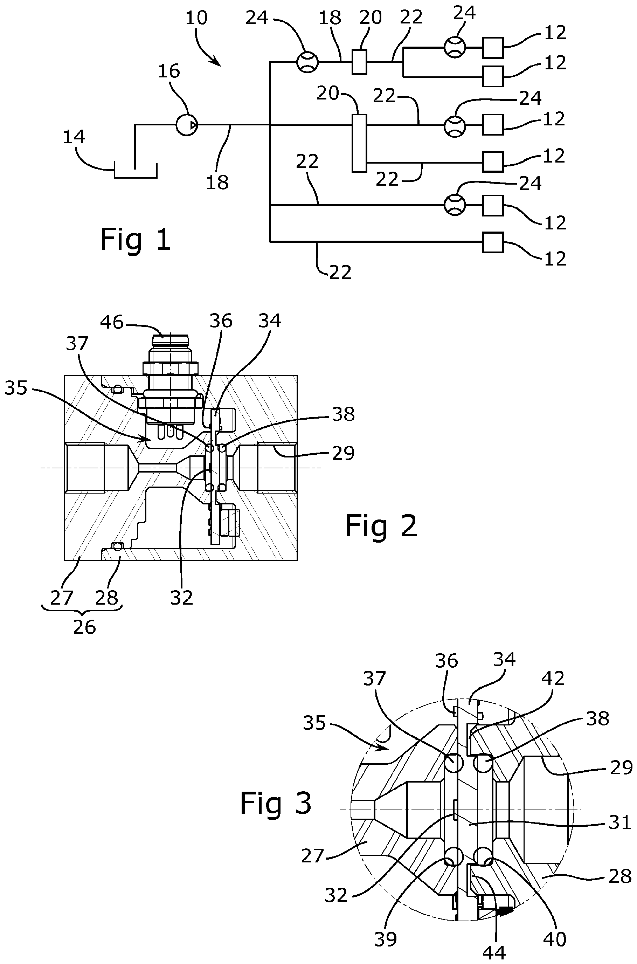

Sur la figure **1** est illustré de façon schématique et simplifiée un circuit **10** de lubrification en graisse d'un ensemble d'un ou plusieurs composants mécaniques **12** d'une installation industrielle, d'une ou plusieurs machines ou d'un ou plusieurs organes de véhicule. Le circuit **10** comporte notamment un réservoir de lubrifiant **14,** une pompe **16,** des conduits centraux de distribution de lubrifiant **18** reliant la pompe **16** à des électrovannes de distribution **20,** et des conduits terminaux **22** d'alimentation en graisse des composants à graisser **12,** situés pour certains au moins en aval des électrovannes **20.** Certains aux moins des conduits **18, 22** du circuit de lubrification, notamment certains des conduits terminaux **22** ou, le cas échéant, des conduits centraux **18,** sont équipés de systèmes de détection de passage de graisse **24.**

Le système de détection de passage de graisse **24,** illustré en détail sur les figures **2** à **4,** comporte un corps rigide **26,** par exemple métallique, constitué de deux tronçons tubulaires **27, 28** fixés l'un à l'autre bout à bout par tout moyen approprié, par exemple par frettage, collage ou vissage, et délimitant ensemble un conduit tubulaire **29** de passage de la graisse, venant s'insérer dans la partie du circuit de lubrification **10** que l'on souhaite surveiller. Entre les deux tronçons **27, 28** du corps rigide **26** est intercalée une carte de circuit imprimé **30,** par exemple en forme de disque, présentant le cas échéant des méplats ou d'autres formes coopérant avec des formes complémentaires du corps rigide **26** de façon à assurer une indexation angulaire de la carte de circuit imprimé **30** lors de son montage, et empêcher sa rotation. Une partie intérieure **31** de la carte de circuit imprimé **30** est disposée à l'intérieur du conduit de passage de la graisse **29** et supporte un transducteur thermoélectrique de mesure, constitué ici par une thermistance de mesure **32.** Une ou plusieurs lumières **33** sont formées dans la partie centrale **31** de la carte de circuit imprimé **30,** pour permettre le passage de la graisse. Une partie extérieure **34** de la carte de circuit imprimé **30,** située hors du conduit de passage de graisse **29,** pénètre dans une cavité **35** du corps **26,** où elle supporte un transducteur de compensation constitué par une thermistance de compensation **36.** L'étanchéité est réalisée par des joints toriques **37, 38,** disposés sur les deux faces de la plaque de circuit imprimé **30,** en appui radial contre des portées cylindriques **39, 40** formées dans les deux tronçons **27, 28** du corps, afin d'empêcher une expulsion des joints **37, 38** par la pression. La carte de circuit imprimé **30** est ainsi pincée entre les joints toriques **37, 38,** en appui contre l'un **27** des deux tronçons du corps **26** et sans contact avec l'autre tronçon **28.** Un jeu fonctionnel est ainsi maintenu entre la carte de circuit imprimé **30** et le tronçon **28.** La carte de circuit imprimé **30** est de préférence pourvue d'une gorge annulaire de positionnement **42,** dans laquelle pénètre une portion d'extrémité annulaire **44** du tronçon **28,** cette portion d'extrémité **44** constituant l'appui radial **40** ainsi qu'une chicane annulaire empêchant la migration du joint d'appui **38** hors de son logement sous l'effet de la pression régnant dans le conduit **29.** Les deux joints toriques **37, 38** peuvent être identiques. Toutefois, et de manière préférentielle, le joint d'appui **38** présente une rigidité supérieure au joint torique **37,** ce dernier étant destiné à s'écraser pour permettre un contact entre la carte de circuit imprimé **30** et le tronçon **27** alors que la déformation du joint d'appui **38** n'amène pas de contact entre la carte de circuit imprimé et le tronçon **28.** Le système de détection est complété par un conduit de lumière **45** débouchant dans le conduit **29** pour permettre un contrôle visuel du passage de graisse, et par un connecteur **46** reliant la carte de circuit imprimé **30** à l'extérieur.

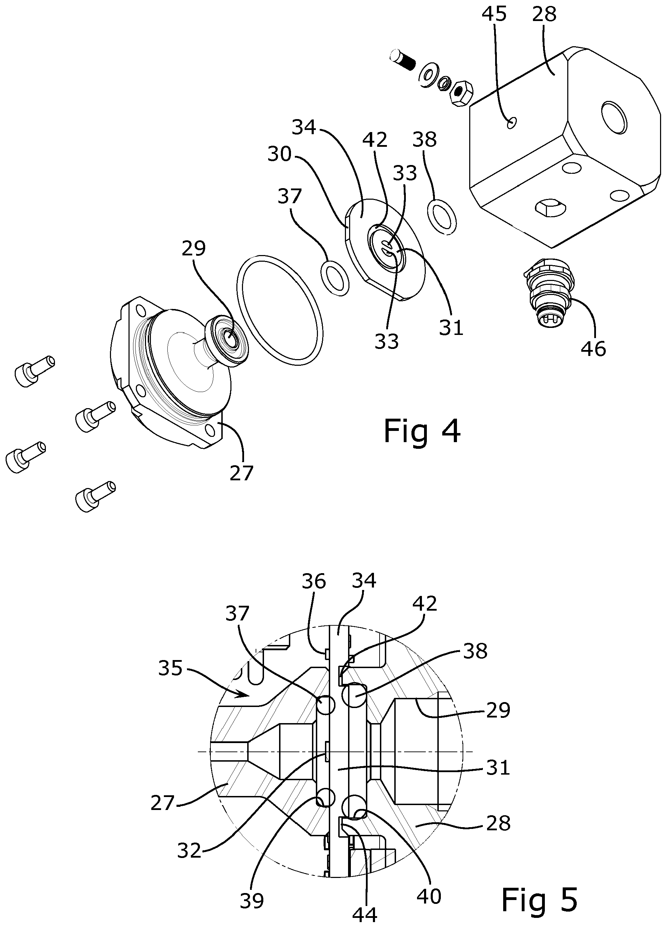

En variante, et suivant le mode de réalisation de la figure **5,** l'un des joints d'étanchéité, en l'occurrence le joint **38** situé du côté de la carte de circuit imprimé **30** sans contact avec le corps rigide **26,** présente un diamètre plus important que l'autre joint **37,** également pour assurer une bonne maîtrise du contact unilatéral de la carte de circuit imprimé **34** avec le corps rigide **26.**

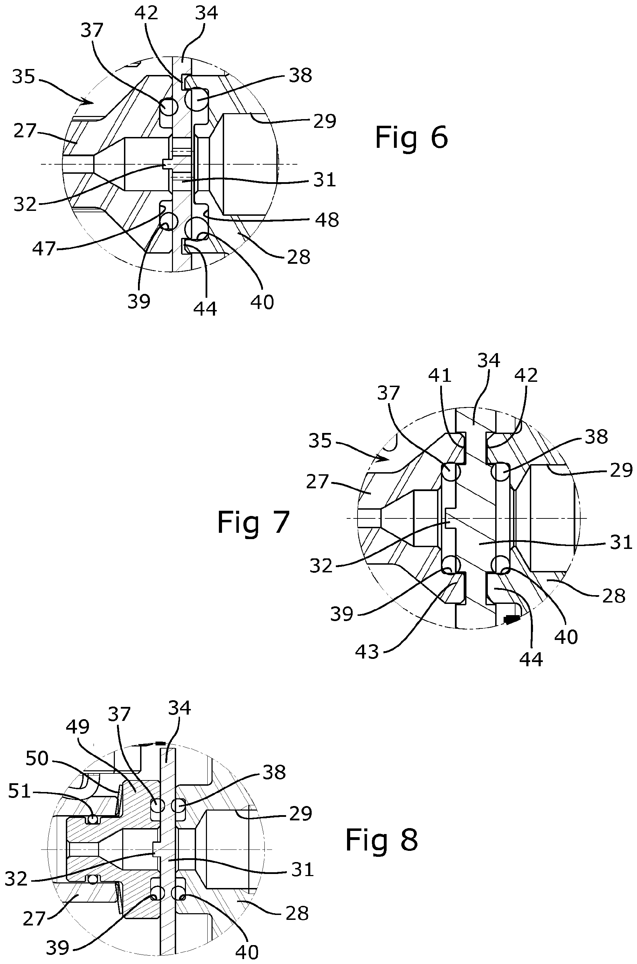

Suivant la variante de la figure **6,** l'une et/ou l'autre des portées cylindriques **39, 40** peuvent être constituées par des flancs de gorges **47, 48** formées dans les tronçons **27, 28** du corps rigide **26.**

Suivant la variante de la figure **7,** on peut prévoir que la carte de circuit imprimé 30 n'ait aucun contact avec le corps rigide **26,** auquel cas on prévoit des gorges annulaires **41, 42** sur les deux faces de la carte de circuit imprimé **30,** et des portions d'extrémité annulaires **43, 44** sur les deux tronçons **27, 28** du corps rigide **26,** de manière à former des chicanes empêchant l'échappement des joints d'appui **37, 38.**

Suivant le mode de réalisation de la figure **8,** le système de détection de passage de graisse **24** comporte une pièce intermédiaire **49** entre le premier tronçon **27** du corps rigide **26** et la plaque de circuit imprimé, et un élément élastique, ici une rondelle déformable **50,** disposé entre le premier tronçon **27** et la pièce intermédiaire pour pousser la pièce intermédiaire **49** axialement au contact de la plaque de circuit imprimé **30** avec une pression de contact maîtrisée. Un joint torique **51** assure l'étanchéité entre le premier tronçon du corps rigide **26** et la pièce intermédiaire **49.** Cette configuration offre l'avantage de ne pas nécessiter de gorges annulaires **41, 42** pour le maintien des joints toriques **37, 38.**

Suivant une variante non illustrée des modes de réalisation précédents, on peut prévoir à l'interface entre la plaque de circuit imprimé **30** et l'un et/ou l'autre des joints d'étanchéité **37, 38** une gorge annulaire de positionnement du joint, formée dans l'épaisseur de la plaque de circuit imprimé **30.**

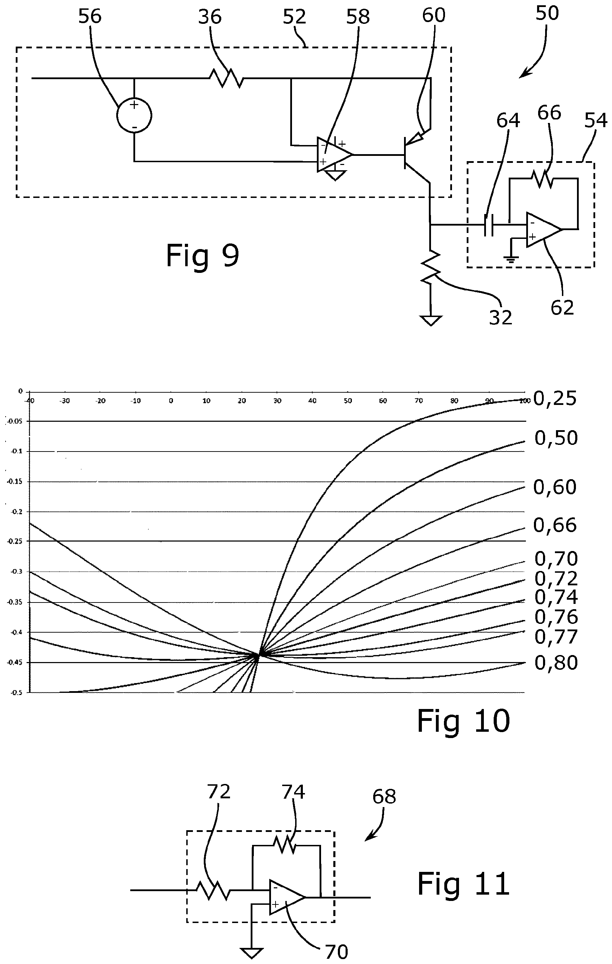

Sur la figure **9** est illustré un circuit électronique **50** du système de détection de passage de graisse **24** selon un premier mode de réalisation de l'invention.

Ce circuit **50** est réalisé sur la plaque de circuit imprimé **30** et comporte la thermistance de mesure **32**, disposée à l'intérieur du conduit **29**, un circuit **52** d'alimentation de la thermistance de mesure en courant régulé, et un circuit **54** de détection de variations temporelles d'une différence de potentiel de mesure entre une borne de la thermistance de mesure **32** et un potentiel de référence **56**.

Le circuit d'alimentation **52** comporte une source de tension **56** délivrant une différence de potentielle positive Vc entre une borne de la thermistance de compensation **36** et une entrée non inverseuse d'un amplificateur opérationnel **58**, dont l'entrée inverseuse est branchée sur l'autre borne de la thermistance de compensation **36**. La sortie du transistor opérationnel est reliée à la base d'un transistor bipolaire PNP **60**, dont l'émetteur est relié à l'entrée inverseuse de l'amplificateur opérationnel, et le collecteur alimente la thermistance de mesure **32**, reliée par ailleurs au potentiel de référence.

La boucle de rétroaction au travers de la base et de l'émetteur du transistor bipolaire **60** entre sortie et entrée inverseuse de l'amplificateur opérationnel **58** impose, aux bornes de la thermistance de compensation **36**, le maintien de la tension constante Vc, de sorte que le courant traversant la thermistance de compensation **36** et alimentant l'émetteur du transistor bipolaire **60** a une intensité $I_C$ qui ne varie qu'en fonction d'une variable, à savoir la résistance Rc de la thermistance de compensation **36**.

Le transistor bipolaire **60** a un gain en courant élevé, de sorte que le courant de collecteur et le courant d'émetteur sont sensiblement égaux. Il s'ensuit que l'intensité $I_M$ du courant traversant la thermistance de mesure **32** est inversement proportionnelle à la résistance de la thermistance de compensation **36** et que, par suite, la tension $V_M$ aux bornes de la thermistance de mesure **32** est proportionnelle au rapport des résistances de la thermistance de mesure **32** et de la thermistance de compensation **36**.

[MATH 1]

$$I_M = \frac{V_M}{R_M} \approx I_C = \frac{V_C}{R_C}$$

[MATH 2]

$$V_M \approx \frac{R_M}{R_C} V_C$$

La résistance électrique $R_M$ de la thermistance de mesure **32** est caractérisée par une résistance électrique $R_{M_0}$ à une température de référence $T_0$ de 300K et une sensibilité $\beta_M$, et varie en fonction de la température absolue T de la thermistance suivant une loi du type :

[MATH 3]

$$R_M \langle T \rangle = R_{M_0} e^{\beta_M \left( \frac{1}{T} - \frac{1}{T_0} \right)}$$

De façon similaire, la résistance électrique $R_C$ de la thermistance de compensation 36 est caractérisée par une résistance électrique $R_{C_0}$ à la température $T_0$ et une sensibilité $\beta_C$, et varie en fonction de la température absolue T de la thermistance suivant une loi du type :

[MATH 4]

$$R_C \langle T \rangle = R_{C_0} e^{\beta_C \left( \frac{1}{T} - \frac{1}{T_0} \right)}$$

La puissance électrique $P_M$ dissipée dans la thermistance de mesure **32** s'exprime en fonction de la résistance électrique $R_M$ et du courant $I_M$ la traversant :

[MATH 5]

$$P_M = R_M I_M{}^2 = R_M \left(\frac{V_C}{R_C}\right)^2$$

Cette puissance est dissipée thermiquement dans le milieu ambiant dans le conduit **29** rempli de graisse selon une loi qui dépend de la résistance thermique unitaire $\rho$ (exprimée en K/W) et de la différence de température $\Delta T$ entre la thermistance de mesure et le milieu ambiant. Or la résistance thermique unitaire $\rho$ dans le conduit **29** rempli de graisse est relativement élevée et varie fortement en fonction de la présence ou non d'un écoulement de graisse.

En l'absence de mouvement, la variation de température entre la température de la thermistance $T_{stat}$ et la température ambiante $T_{amb}$ étant désignée $\Delta T_{Stat}$ et la résistance thermique unitaire $\rho_{M_{stat}}$, on peut écrire :

[MATH 6]

$$\Delta T_{stat} = T_{stat} - T_{amb} = P_M \cdot \rho_{M_{stat}} = R_M \left(\frac{V_C}{R_C}\right)^2 \rho_{M_{stat}}$$

La thermistance de compensation **36** est quant à elle positionnée dans la cavité **35**, hors du conduit **29** où se trouve la thermistance de mesure **32**, à proximité de cette dernière, de sorte à être exposée à la même température ambiante. La thermistance de compensation **36** est toutefois plus volumineuse que la thermistance de mesure **32**, et présente une surface d'échange thermique plus importante avec le milieu ambiant. De plus, la valeur $R_{C_0}$ est beaucoup plus faible que la valeur $R_{M_0}$, d'un facteur supérieur à 10, voire de l'ordre de 100, de sorte que l'échauffement de la thermistance de compensation **36** est très faible, et que l'on peut considérer que la thermistance de compensation **36** se trouve toujours à la température ambiante.

L'équation [MATH 6] peut donc s'exprimer plus précisément de la façon suivante :

[MATH 7]

$$\Delta T_{stat} = T_{stat} - T_{amb} = P_M \cdot \rho_{M_{stat}} = R_M \langle T_{amb} + \Delta T_{stat} \rangle \left(\frac{V_C}{R_C \langle T_{amb} \rangle}\right)^2 \rho_{M_{stat}}$$

[MATH 8]

$$\Delta T_{stat} = \frac{R_{M_0}}{R_{C_0}{}^2} V_C{}^2 \cdot e^{\left(\beta_M \left(\frac{1}{T_{amb} + \Delta T_{stat}} - \frac{1}{T_0}\right) - 2\beta_C \left(\frac{1}{T_{amb}} - \frac{1}{T_0}\right)\right)} \rho_{M_{stat}}$$

On peut donc, pour une température ambiante $T_{amb}$ donnée, exprimer la tension $V_M$ obtenu en l'absence de mouvement de graisse, de la manière suivante :

[MATH 9]

$$V_M\langle T_{amb}\rangle_{stat} = \frac{R_M\langle T_{amb} + \Delta T_{stat}\rangle}{Rc\langle T_{amb}\rangle}V_C = \frac{R_{M_0}}{R_{C_0}}V_C.e^{\left(\beta_M\left(\frac{1}{T_{amb}+\Delta T_{stat}}-\frac{1}{T_0}\right)-\beta_C\left(\frac{1}{T_{amb}}-\frac{1}{T_0}\right)\right)}$$

$$= \frac{R_{M_0}}{R_{C_0}}V_C.e^{\left(\beta_M\left(\frac{1}{T_{amb}+\frac{R_{M_0}}{R_{C_0}{}^2}V_C{}^2.e^{\left(\beta_M\left(\frac{1}{T_{amb}+\Delta T_{stat}}-\frac{1}{T_0}\right)-2\beta_C\left(\frac{1}{T_{amb}}-\frac{1}{T_0}\right)\right)}\rho_{M_{stat}}}-\frac{1}{T_0}\right)-\beta_C\left(\frac{1}{T_{amb}}-\frac{1}{T_0}\right)\right)}$$

De façon similaire, en présence de mouvement de graisse, la variation de température entre la température de la thermistance $T_{dyn}$ et la température ambiante $T_{amb}$ étant désignée $\Delta T_{dyn}$ et la résistance thermique unitaire $\rho_{M_{dyn}}$, on peut écrire :

[MATH 10]

$$\Delta T_{dyn} = T_{dyn} - T_{amb} = P_M.\rho_{M_{dyn}} = R_M\langle T_{amb} + \Delta T_{dyn}\rangle\left(\frac{V_C}{R_C\langle T_{amb}\rangle}\right)^2\rho_{M_{dyn}}$$

[MATH 11]

$$V_M\langle T_{amb}\rangle_{dyn} = \frac{R_M\langle T_{amb} + \Delta T_{dyn}\rangle}{Rc\langle T_{amb}\rangle}V_C = \frac{R_{M_0}}{R_{C_0}}V_C.e^{\left(\beta_M\left(\frac{1}{T_{amb}+\Delta T_{dyn}}-\frac{1}{T_0}\right)-\beta_C\left(\frac{1}{T_{amb}}-\frac{1}{T_0}\right)\right)}$$

$$= \frac{R_{M_0}}{R_{C_0}}V_C.e^{\left(\beta_M\left(\frac{1}{T_{amb}+\frac{R_{M_0}}{R_{C_0}{}^2}V_C{}^2.e^{\left(\beta_M\left(\frac{1}{T_{amb}+\Delta T_{dyn}}-\frac{1}{T_0}\right)-2\beta_C\left(\frac{1}{T_{amb}}-\frac{1}{T_0}\right)\right)}\rho_{M_{dyn}}}-\frac{1}{T_0}\right)-\beta_C\left(\frac{1}{T_{amb}}-\frac{1}{T_0}\right)\right)}$$

Il s'ensuit que, pour une valeur donnée $T_{amb}$ de la température ambiante, la tension aux bornes de la thermistance de mesure **32** prend une valeur $V_M\langle T_{amb}\rangle_{stat}$ en l'absence de mouvement de graisse dans le conduit, et une valeur différente $V_M\langle T_{amb}\rangle_{dyn}$ en présence d'un mouvement de graisse.

La variation de tension $V_M\langle T_{amb}\rangle_{dyn}$ - $V_M\langle T_{amb}\rangle_{stat}$ constitue donc une indication d'un mouvement de graisse.

Cette variation de tension est toutefois une fonction non constante de la température ambiante $T_{amb}$. Or, pour que le circuit de détection des variations temporelles de la tension $V_M$ puisse fonctionner sur une gamme importante de température ambiante, il est nécessaire que les variations de la différence $V_M\langle T_{amb}\rangle_{dyn}$ - $V_M\langle T_{amb}\rangle_{stat}$ en fonction de la température ambiante soient faibles.

En pratique, il s'avère que l'on peut choisir opportunément le rapport $k$ entre la sensibilité $\beta_C$ de la thermistance de compensation **36** et la sensibilité $\beta_M$ de la thermistance de mesure **32,** pour minimiser ces variations. On peut, par une méthode itérative, déterminer les variations de la différence de tension $V_M\langle T_{amb}\rangle_{dyn}$ - $V_M\langle T_{amb}\rangle_{stat}$ (en ordonnées) en fonction de la température ambiante $T_{amb}$ (en abscisse) pour une gamme de températures ambiantes donnée (entre

$$k = \frac{\beta_C}{\beta_M}$$

-40°C et 100°C), pour différentes valeurs du rapport . Les résultats d'un tel calcul numérique itératifs ont été illustrés sur le graphe de la figure **10,** où l'axe des abscisses représente $T_{amb}$ (en abscisse) et l'axe des ordonnées représente la différence de tension $V_M(T_{amb})_{dyn} - V_M(T_{amb})_{stat}$.

Les courbes se croisent pour une valeur de la température ambiante $T_{amb}$ à la température de référence $T_0$. On observe que les courbes sont relativement plates pour des valeurs de $k$ comprises entre 0,72 et 0,77. En pratique, on retiendra comme coefficients k valables, les coefficients qui permettent d'assurer que, dans une plage de la température ambiante donnée comprise entre -40°C et 105 °C, la différence entre la tension de mesure $V_M(T_{amb})_{stat}$ constatée pour une première valeur $\rho_{M_{stat}}$ de la résistance thermique et la tension de mesure $V_M(T_{amb})_{dyn}$ constatée pour une deuxième valeur de la résistance thermique $\rho_{M_{dyn}}$ comprise entre 20% et 90% de la première valeur $\rho_{M_{stat}}$ de la résistance thermique, est en valeur absolue comprise entre 50% et 150% de la différence entre la tension de mesure $V_M(300K)_{stat}$ constatée à 25°C pour la première valeur $\rho_{M_{stat}}$ de la résistance thermique et la tension de mesure $V_M(300K)_{dyn}$ constatée à 25°C pour la deuxième valeur de la résistance thermique $\rho_{M_{dyn}}$ :

[MATH 12]

$$0,2 \cdot \rho_{M_{stat}} < \rho_{M_{dyn}} < 0,9 \cdot \rho_{M_{stat}} \Rightarrow$$

$$0,5 \cdot (V_M\langle 300K\rangle_{stat} - V_M\langle 300K\rangle_{dyn}) < V_M\langle T_{amb}\rangle_{stat} - V_M\langle T_{amb}\rangle_{dyn}$$

$$< 1,5 \cdot (V_M\langle 300K\rangle_{stat} - V_M\langle 300K\rangle_{dyn})$$

Le circuit **54** de détection de variations temporelles d'une différence de potentiel de mesure entre une borne de la thermistance de mesure **32** et un potentiel de référence est un circuit différentiateur, faisant appel à un amplificateur opérationnel **62** dont l'entrée non inverseuse est au potentiel de référence et l'entrée inverseuse et reliée à la sortie par un condensateur **64** de valeur $C_D$ et à la borne du thermistor de mesure **32** donnant la tension Vs par une résistance **66** de valeur $R_D$. La tension de sortie $V_D$ suit alors la loi :

[MATH 13]

$$V_D = R_D C_D \frac{dV_M}{dt}$$

Les valeurs du filtre passe-haut sont choisies pour que les variations lentes du signal d'entrée $V_M$ liées aux variations de la température ambiante $T_{amb}$ soient filtrées, et que les variations rapides liées aux mises en mouvement de la graisse dans le conduit soient transmises.

Dans l'hypothèse où le rapport $k$ n'est pas choisi de façon optimale pour réduire l'influence de la composante exponentielle des équations [MATH 8], [MATH 9] et [MATH 11], un circuit d'amplification à gain variable **68,** illustré sur la figure **11,** peut être interposé entre la borne de sortie de la thermistance de mesure **32** et le circuit différentiateur **54,** pour corriger les variations de la tension $V_M$ en fonction de la température ambiante. Plus spécifiquement, la tension $V_M$ alimente l'entrée inverseuse d'un amplificateur opérationnel **70.** par l'intermédiaire d'une résistance **72** de valeur R. Une boucle de rétroaction est formée entre la sortie et l'entrée inverseuse de l'amplificateur opérationnel **70,** et une thermistance d'amplification **74** est positionnée dans cette boucle. L'entrée non inverseuse de l'amplificateur opérationnel **70** est reliée à la référence de tension. La boucle de rétroaction de l'amplificateur opérationnel **70** impose à l'entrée inverseuse une tension égale à la tension de référence. On a ainsi :

[MATH 14]

$$V_S = -V_M \frac{R_A}{R} = -V_M \frac{R_{A_0}}{R} e^{\beta_A \left(\frac{1}{T_{amb}} - \frac{1}{T_0}\right)}$$

La tension corrigée Vs est ainsi régie par la loi :

[MATH 15]

$$V_S\langle T_{amb}\rangle$$

$$= -\frac{R_{M_0}}{R_{C_0}}V_C\frac{R_{A_0}}{R}e^{\beta_A\left(\frac{1}{T_{amb}}-\frac{1}{T_0}\right)}.e^{\left(\beta_M\left(\frac{1}{T_{amb}+\frac{R_{M_0}}{R_{C_0}^2}V_C^2.e^{\left(\beta_M\left(\frac{1}{T_{amb}+\Delta T_{dyn}}-\frac{1}{T_0}\right)-2\beta_C\left(\frac{1}{T_{amb}}-\frac{1}{T_0}\right)\right)}\rho_{M_{dyn}}}-\frac{1}{T_0}\right)-\beta_C\left(\frac{1}{T_{amb}}-\frac{1}{T_0}\right)\right)}$$

$$= -\frac{R_{M_0}}{R_{C_0}}V_C\frac{R_{A_0}}{R}.e^{\left(\beta_M\left(\frac{1}{T_{amb}+\frac{R_{M_0}}{R_{C_0}^2}V_C^2.e^{\left(\beta_M\left(\frac{1}{T_{amb}+\Delta T_{dyn}}-\frac{1}{T_0}\right)-2\beta_C\left(\frac{1}{T_{amb}}-\frac{1}{T_0}\right)\right)}\rho_{M_{dyn}}}-\frac{1}{T_0}\right)-\beta_C\left(\frac{1}{T_{amb}}-\frac{1}{T_0}\right)+\beta_A\left(\frac{1}{T_{amb}}-\frac{1}{T_0}\right)\right)}$$

Par analogie avec le calcul numérique ayant permis de tracer le graphe de la figure 10, on constate qu'une réponse optimale en température est obtenue pour :

[MATH 16]

$$0,72 < \frac{\beta_C - \beta_A}{\beta_M} < 0,77$$

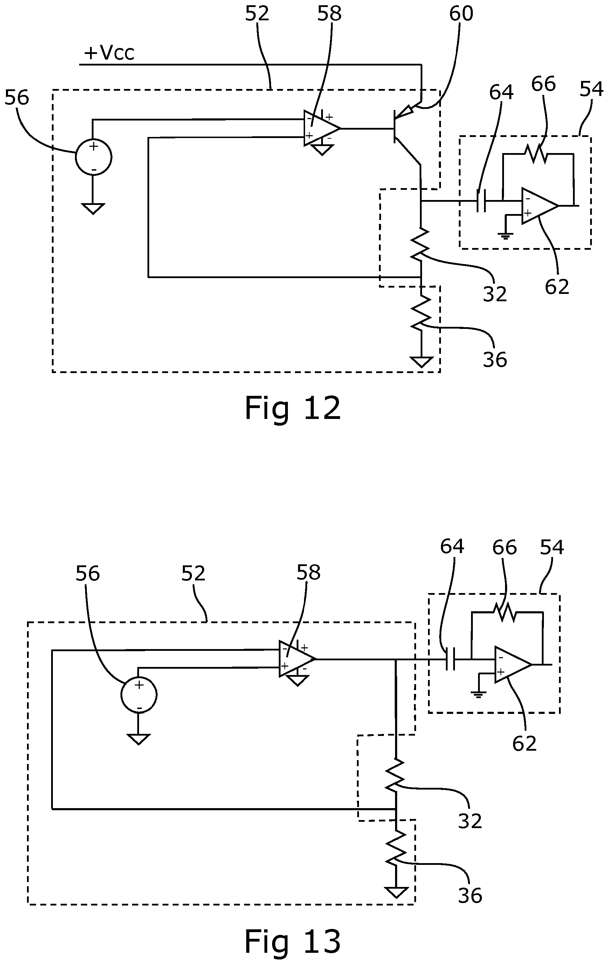

On a illustré sur la figure **12** un autre circuit permettant d'assurer l'alimentation de la thermistance de mesure **32** par un courant inversement proportionnel à la résistance de la thermistance de compensation **36**.

Une source de tension délivre une tension constante Vc à l'entrée inverseuse du amplificateur opérationnel **58**, dont l'entrée non inverseuse est branchée à une borne intermédiaire d'un pont de tension formé par une thermistance de mesure **32** en série avec une thermistance de compensation **36** connectée à un potentiel de référence, la thermistance de mesure **32** étant connectée au collecteur d'un transistor bipolaire PNP **60** dont l'émetteur est connecté à l'alimentation du circuit et la base est pilotée par la sortie de l'amplificateur opérationnel **58**. Le circuit impose une tension Vc à la jonction entre la thermistance de mesure **32** et la thermistance de compensation **36**, qui sont parcourues par le même courant. On retrouve ainsi une loi des courants électriques similaire à l'équation [MATH 1] du premier mode de réalisation :

[MATH 17]

$$I_M = I_C = \frac{V_C}{R_C}$$

Sur la figure **13** est illustré un autre exemple d'un circuit permettant d'assurer l'alimentation de la thermistance de mesure **32** par un courant inversement proportionnel à la résistance de la thermistance de compensation **36**. Une source de tension délivre une tension constante Vc à l'entrée non inverseuse du amplificateur opérationnel **58**, dont l'entrée inverseuse est branchée à une borne intermédiaire d'un pont de tension formé par une thermistance de mesure **32** en série avec une thermistance de compensation **36** connectée à un potentiel de référence, la thermistance de mesure **32** étant connectée à la sortie de l'amplificateur opérationnel **58**. Le circuit impose une tension Vc à la jonction entre la thermistance de mesure **32** et la thermistance de compensation **36**, qui sont parcourues par le même courant. On retrouve ainsi une loi des courants électriques similaire à l'équation [MATH 1] du premier mode de réalisation :

[MATH 18]

$$I_M = I_C = \frac{V_C}{R_C}$$

En variante, le circuit **54** de détection de variations temporelles d'une différence de potentiel de mesure entre une borne de la thermistance de mesure **32** et un potentiel de référence peut incorporer un filtre passe-bas du premier ordre ou de préférence au moins du deuxième ordre branché sur la borne de la thermistance de mesure **32,** un circuit intégrateur qui intègre la différence entre la tension de sortie du filtre passe-bas et la tension prise directement au niveau de la borne de la thermistance de mesure **32,** et un circuit comparateur qui compare la sortie de l'intégrateur à un seuil donné, et, lorsque ce seuil est atteint, remet l'intégrateur à zéro et envoie un signal de détection. Cette fonction peut par ailleurs être réalisée numériquement par un microcontrôleur.

Dans les modes de réalisation discutés précédemment, on utilise pour piloter le courant traversant la thermistance de mesure un circuit d'alimentation 52 piloté par un dipôle électrique simple constitué d'une unique thermistance de compensation 36. En variante, on peut utiliser un dipôle électrique comportant plusieurs thermistances de compensation 36 branchées en série ou en parallèle, pour autant que ces thermistances de compensation 36 aient le même coefficient de température négatif, le dipôle se comportant alors globalement comme une thermistance à coefficient de température négatif unique.

Naturellement, les exemples représentés sur les figures et discutés ci-dessus ne sont donnés qu'à titre illustratif et non limitatif.

**Revendications**

**1.** Système de détection (24) d'un flux de produit fluide ou pâteux, comportant :

    - une thermistance de mesure (32) ayant un coefficient de température négatif, la thermistance de mesure (32) étant apte à être positionnée dans un milieu ambiant de mesure ayant une température ambiante donnée et à présenter, par rapport au milieu ambiant de mesure, une résistance thermique qui varie en fonction de la présence ou de l'absence d'un flux de produit fluide ou pâteux dans le milieu ambiant de mesure, et
    - un circuit de détection (54) de variations temporelles d'une différence de potentiel de mesure entre une borne de la thermistance de mesure (32) et un potentiel de référence,

**caractérisé en ce qu'**il comporte en outre un circuit d'alimentation (52) de la thermistance de mesure (32) régulé en courant, piloté par un dipôle électrique de compensation comportant une ou plusieurs thermistances de compensation (36) ayant un coefficient de température négatif identique branchées en série ou en parallèle, la ou les thermistances de compensation (36) étant aptes à être positionnées dans un milieu ambiant de référence (35) à la température ambiante donnée, de manière à délivrer un courant d'alimentation de la thermistance de mesure (32) ayant une intensité qui est inversement proportionnelle à la résistance du dipôle électrique de compensation (36).

**2.** Système de détection selon la revendication 1, **caractérisé en ce que** le coefficient de température négatif de la thermistance de mesure (32) et le coefficient de température négatif de la ou les thermistances de compensation (36) sont appariés de manière telle que, dans une plage de la température ambiante $T_{amb}$ donnée comprise entre -40°C et 105 °C, la différence entre la tension de mesure $V_M(T_{amb})_{stat}$ constatée pour une première valeur $\rho_{Mstat}$ de la résistance thermique et la tension de mesure $V_M(T_{amb})_{dyn}$ constatée pour une deuxième valeur de la résistance thermique $\rho_{Mdyn}$ comprise entre 20% et 90% de la première valeur $\rho_{Mstat}$ de la résistance thermique, est en valeur absolue comprise entre 50% et 150% de la différence entre la tension de mesure $V_M(300K)_{stat}$ constatée à 25°C pour la première valeur $\rho_{Mstat}$ de la résistance thermique et la tension de mesure $V_M(300K)_{dyn}$ constatée à 25°C pour la deuxième valeur de la résistance thermique $\rho_{Mdyn}$.

**3.** Système de détection selon l'une quelconque des revendications précédentes, **caractérisé en ce que** le coefficient de température négatif $\beta_M$ de la thermistance de mesure (32) et le coefficient de température négatif $\beta_C$ de la ou les thermistances de compensation (36) sont appariés de telle sorte que :

$$0,65 \leq \frac{\beta_C}{\beta_M} \leq 0,85$$

avec, de préférence :

$$\frac{\beta_C}{\beta_M} \leq 0,8$$

et/ou avec, de préférence :

$$0,7 \leq \frac{\beta_C}{\beta_M}$$

4. Système de détection selon l'une quelconque des revendications précédentes, **caractérisé en ce que** le circuit de détection (54) de variations d'une différence de potentiel de mesure entre une borne de la thermistance de mesure (32) et un potentiel de référence est un circuit différentiateur, de préférence de premier ordre.

5. Système de détection selon l'une quelconque des revendications précédentes, **caractérisé en ce qu'**il comporte en outre un circuit auxiliaire d'amplification (68) de la différence de potentiel de mesure, comportant au moins une thermistance d'amplification (74) ayant un coefficient de température négatif, la thermistance d'amplification (74) étant apte à être positionnée dans le milieu ambiant de référence, le circuit auxiliaire d'amplification ayant un rapport d'amplification variant linéairement en fonction de la résistance de la thermistance d'amplification (74).

6. Système de détection selon l'une quelconque des revendications précédentes, **caractérisé en ce qu'**il comporte en outre un conduit (29) de passage du flux de produit fluide ou pâteux, délimitant le milieu ambiant de mesure dans lequel est positionné la thermistance de mesure (32), et un support (34) extérieur au conduit (29), sur lequel est positionné la thermistance de compensation (36), le support extérieur (34) étant couplé thermiquement au conduit (29).

7. Système de détection selon la revendication 6, **caractérisé en ce que** le produit fluide ou pâteux est une graisse, et **en ce que** le conduit (29) est un conduit de graissage apte à être intégré à un circuit de lubrification (10) en graisse d'un ensemble d'un ou plusieurs composants mécaniques (12) d'une installation industrielle, d'une ou plusieurs machines, ou d'un ou plusieurs organes de véhicule.

8. Circuit de lubrification (10) en graisse d'un ensemble d'un ou plusieurs composants (12) d'une installation industrielle, d'une ou plusieurs machines, ou d'un ou plusieurs organes de véhicule, comportant un système de détection (24) selon la revendication 7, le conduit (29) de graissage du système de détection étant intégré au circuit de lubrification (10) en graisse.

9. Méthode de détection d'un flux de produit fluide ou pâteux, comportant :

    - un positionnement d'une thermistance de mesure (32) ayant un coefficient de température négatif, dans un milieu ambiant de mesure ayant une température ambiante donnée, la thermistance de mesure (32) étant apte à présenter, par rapport au milieu ambiant de mesure, une résistance thermique qui varie en fonction de la présence ou de l'absence d'un flux de produit fluide ou pâteux dans le milieu ambiant de mesure, et

    - une mesure d'une variation temporelle d'une différence de potentiel de mesure entre une borne de la thermistance de mesure (32) et un potentiel de référence,

    **caractérisé en ce qu'**il comporte en outre

    - un positionnement d'un dipôle électrique comportant une ou plusieurs thermistances de compensation (36) ayant un coefficient de température négatif identique branchées en série ou en parallèle, dans un milieu ambiant de référence (35) à la température ambiante donnée,

    - une alimentation de la thermistance de mesure (32) par un courant d'alimentation régulé ayant une intensité qui est inversement proportionnelle à la résistance électrique du dipôle de compensation (36).

10. Méthode de détection selon la revendication 9, **caractérisé en ce que** le coefficient de température négatif de la thermistance de mesure (32) et le coefficient de température négatif de la ou les thermistances de compensation (36) sont appariés de manière telle que dans une plage de la température ambiante $T_{amb}$ donnée comprise entre –40°C et 105 °C, la différence entre la tension de mesure $V_M(T_{amb})_{stat}$ constatée pour une première valeur $\rho_{Mstat}$ de la résistance thermique et la tension de mesure $V_M(T_{amb})_{dyn}$ constatée pour une deuxième valeur de la résistance thermique $\rho_{Mdyn}$ comprise entre 20% et 90% de la première valeur $\rho_{Mstat}$ de la résistance thermique, est en valeur absolue comprise entre 50% et 150% de la différence entre la tension de mesure $V_M(300K)_{stat}$ constatée à 25°C pour la première valeur $\rho_{Mstat}$ de la résistance thermique et la tension de mesure $V_M(300K)_{dyn}$ constatée à 25°C pour la deuxième valeur de la résistance thermique $\rho_{Mdyn}$.

11. Méthode de détection selon l'une quelconque des revendications 9 à 10, **caractérisée en ce que** le coefficient de

température négatif $\beta_M$ de la thermistance de mesure (32) et le coefficient de température négatif $\beta_C$ de la ou les thermistances de compensation (36) sont appariés de telle sorte que :

$$0,65 \leq \frac{\beta_C}{\beta_M} \leq 0,85$$

avec, de préférence :

$$\frac{\beta_C}{\beta_M} \leq 0,78$$

et/ou avec, de préférence :

$$0,67 \leq \frac{\beta_C}{\beta_M}$$

**12.** Méthode de détection selon l'une quelconque des revendications 9 à 11, **caractérisée en ce qu'**elle comporte en outre une amplification de la différence de potentiel de mesure avec un rapport d'amplification variant linéairement en fonction de la résistance d'au moins une thermistance d'amplification (74) positionnée dans le milieu ambiant de référence.

**13.** Méthode de détection selon l'une quelconque des revendications 9 à 12, **caractérisée en ce que** le milieu ambiant de mesure est délimité par un conduit (29) de passage du flux de produit fluide ou pâteux, le positionnement de la thermistance de mesure (32) étant fait dans le conduit (29), le positionnement de la ou les thermistances de compensation (36) étant fait sur un support (34) extérieur au conduit (29) et couplé thermiquement au conduit (29).

**14.** Méthode de détection selon la revendication 13, **caractérisée en ce que** le produit fluide ou pâteux est une graisse, et **en ce que** le conduit (29) est un conduit de graissage intégré à un circuit de lubrification (10) en graisse d'un ensemble d'un ou plusieurs composants (12) d'une installation industrielle, d'une ou plusieurs machines ou d'un ou plusieurs organes de véhicule.

**15.** Méthode de lubrification en graisse d'un ensemble d'un ou plusieurs composants (12) d'une installation industrielle, d'une ou plusieurs machines ou d'un ou plusieurs organes de véhicule, dans laquelle on détecte un passage de graisse dans un conduit (29) de graissage d'un circuit de lubrification (10) de l'ensemble d'un ou plusieurs composants (12) par la méthode de détection de la revendication 14.

**Patentansprüche**

**1.** System zur Erkennung (24) eines Flusses eines flüssigen oder pastösen Produkts, umfassend:

- einen Messthermistor (32) mit einem negativen Temperaturkoeffizienten, wobei der Messthermistor (32) in einem umgebenden Messmedium mit einer gegebenen Umgebungstemperatur positioniert werden kann und in Bezug auf das umgebende Messmedium einen Wärmewiderstand aufweist, der sich in Abhängigkeit von der Anwesenheit oder Abwesenheit eines Stroms eines flüssigen oder pastösen Produkts in dem umgebenden Messmedium ändert, und
- eine Schaltung zur Erfassung (54) zeitlicher Änderungen einer Messpotentialdifferenz zwischen einem Anschluss des Messthermistors (32) und einem Referenzpotential,
**dadurch gekennzeichnet, dass** er außerdem eine stromgeregelte Versorgungsschaltung (52) für den Messthermistor (32) umfasst, die von einem elektrischen Kompensationsdipol angesteuert wird, der einen oder mehrere Kompensationsthermistoren (36) mit einem identischen negativen Temperaturkoeffizienten umfasst, die in Reihe oder parallel geschaltet sind, wobei der Kompensationsthermistor oder die Kompensationsthermistoren (36) geeignet sind, in einem Referenzumgebungsmedium (35) bei der gegebenen Umgebungstemperatur positioniert zu werden, um einen Strom zur Versorgung des Messthermistors (32) zu liefern, der eine Stärke hat, die umgekehrt proportional zum Widerstand des elektrischen Kompensationsdipols (36) ist.

2. System zur Erkennung nach Anspruch 1, **dadurch gekennzeichnet, dass** der negative Temperaturkoeffizient des Messthermistors (32) und der negative Temperaturkoeffizient des Kompensationsthermistors bzw. der Kompensationsthermistoren (36) so gepaart sind, dass in einem Bereich der gegebenen Umgebungstemperatur $T_{amb}$ zwischen -40 °C und 105 °C, die Differenz zwischen der Messspannung $_M\langle T_{amb}\rangle_{stat}$, die für einen ersten Wert $\rho_{M_{stat}}$ des Wärmewiderstands festgestellt wird, und der Messspannung $V_M\langle T_{amb}\rangle_{dyn}$, die für einen zweiten Wert des Wärmewiderstands $\rho_{M_{dyn}}$ festgestellt wird, der zwischen 20 % und 90 % des ersten Werts $\rho_{M_{stat}}$ des Wärmewiderstands liegt, absolut zwischen 50 % und 150 % der Differenz zwischen der Messspannung $V_M\langle 300K\rangle_{stat}$, die bei 25 °C für den ersten Wert $\rho_{M_{stat}}$ des Wärmewiderstands festgestellt wurde, und der Messspannung $V_M\langle 300K\rangle_{dyn}$, die bei 25 °C für den zweiten Wert des Wärmewiderstands $\rho_{M_{dyn}}$.festgestellt wurde.

3. System zur Erkennung nach einem der vorhergehenden Ansprüche, **dadurch gekennzeichnet, dass** der negative Temperaturkoeffizient $\beta_M$ des Messthermistors (32) und der negative Temperaturkoeffizient $\beta_C$ des oder der Kompensationsthermistoren (36) folgendermaßen aufeinander abgestimmt sind:

$$0{,}65 \leq \frac{\beta_C}{\beta_M} \leq 0{,}85$$

mit, vorzugsweise:

$$\frac{\beta_C}{\beta_M} \leq 0{,}8$$

und/oder mit, vorzugsweise:

$$0{,}7 \leq \frac{\beta_C}{\beta_M}$$

4. System zur Erkennung nach einem der vorhergehenden Ansprüche, **dadurch gekennzeichnet, dass** die Schaltung zur Erfassung (54) von Schwankungen einer Messpotentialdifferenz zwischen einem Anschluss des Messthermistors (32) und einem Referenzpotential eine Differenzierschaltung, vorzugsweise erster Ordnung, ist.

5. System zur Erkennung nach einem der vorhergehenden Ansprüche, **dadurch gekennzeichnet, dass** es außerdem einen Hilfsschaltkreis (68) zur Verstärkung der Messpotentialdifferenz umfasst, der mindestens einen Verstärkungsthermistor (74) mit einem negativen Temperaturkoeffizienten umfasst, wobei der Verstärkungsthermistor (74)) in der Referenzumgebung positioniert werden kann, wobei die Hilfsverstärkungsschaltung ein Verstärkungsverhältnis aufweist, das sich linear abhängig vom Widerstand der Thermistorverstärkung (74) ändert.

6. System zur Erkennung nach einem der vorhergehenden Ansprüche, **dadurch gekennzeichnet, dass** es außerdem eine Leitung (29) für den Durchgang des Stroms des flüssigen oder pastösen Produkts, die das umgebende Messmedium begrenzt, in dem der Messthermistor (32) positioniert ist, und einen Träger (34) außerhalb der Leitung (29), auf dem der Kompensationsthermistor (36) positioniert ist, umfasst, wobei der äußere Träger (34) thermisch mit der Leitung (29) gekoppelt ist.

7. System zur Erkennung nach Anspruch 6,
   **dadurch gekennzeichnet, dass** das flüssige oder pastöse Produkt ein Fett ist und dass die Leitung (29) eine Schmierleitung ist, die geeignet ist, in einen Fettschmierkreislauf (10) einer Gesamtheit von einem oder mehreren mechanischen Bauteilen (12) einer Industrieanlage, einer oder mehrerer Maschinen oder eines oder mehrerer Fahrzeugteile integriert zu werden.

8. Fettschmierkreislauf (10) einer Baugruppe aus einem oder mehreren Bauteilen (12) einer Industrieanlage, einer oder mehreren Maschinen oder einem oder mehreren Fahrzeugteilen, mit einem System zur Erkennung (24) nach Anspruch 7, wobei die Schmierleitung (29) des Systems zur Erkennung in den Fettschmierkreislauf (10) integriert ist.

9. Verfahren zur Erkennung eines Flusses eines flüssigen oder pastösen Produkts, das Folgendes umfasst:

- eine Positionierung eines Messthermistors (32) mit einem negativen Temperaturkoeffizienten in einem umgebenden Messmedium mit einer gegebenen Umgebungstemperatur, wobei der Messthermistor (32) geeignet ist, in Bezug auf das umgebende Messmedium einen Wärmewiderstand aufzuweisen, der sich in Abhängigkeit von der Anwesenheit oder Abwesenheit eines Stroms eines flüssigen oder pastösen Produkts in dem umgebenden Messmedium ändert, und

- eine Messung einer zeitlichen Variation einer Messpotentialdifferenz zwischen einem Anschluss des Messthermistors (32) und einem Referenzpotential, **dadurch gekennzeichnet, dass** dies weiterhin Folgendes umfasst:

- eine Positionierung eines elektrischen Dipols mit einem oder mehreren Kompensationsthermistoren (36) mit einem identischen negativen Temperaturkoeffizienten, die in Reihe oder parallel geschaltet sind, in einem Referenzumgebungsmedium (35) bei der gegebenen Umgebungstemperatur,

- eine Versorgung des Messthermistors (32) mit einem geregelten Versorgungsstrom mit einer Stromstärke, die umgekehrt proportional zum elektrischen Widerstand des Kompensationsdipols (36) ist.

10. Verfahren zur Erkennung nach Anspruch 9,
**dadurch gekennzeichnet, dass** der negative Temperaturkoeffizient des Messthermistors (32) und der negative Temperaturkoeffizient des Kompensationsthermistors bzw. der Kompensationsthermistoren (36) so gepaart sind, dass in einem Bereich der gegebenen Umgebungstemperatur $T_{amb}$ zwischen -40 °C und 105 °C, die Differenz zwischen der Messspannung $_M\langle T_{amb}\rangle_{stat}$, die für einen ersten Wert $\rho_{Mstat}$ des Wärmewiderstands festgestellt wird, und der Messspannung $V_M(T_{amb})_{dyn}$, die für einen zweiten Wert des Wärmewiderstands $\rho_{Mdyn}$ festgestellt wird, der zwischen 20 % und 90 % des ersten Werts $\rho_{Mstat}$ des Wärmewiderstands liegt, absolut zwischen 50 % und 150 % der Differenz zwischen der Messspannung $V_M\langle 300K\rangle_{stat}$, die bei 25 °C für den ersten Wert $\rho_{Mstat}$ des Wärmewiderstands festgestellt wurde, und der Messspannung $V_M\langle 300K\rangle_{dyn}$, die bei 25 °C für den zweiten Wert des Wärmewiderstands $\rho_{Mdyn}$ festgestellt wurde.

11. Verfahren zur Erkennung nach einem der Ansprüche 9 bis 10, **dadurch gekennzeichnet, dass** der negative Temperaturkoeffizient $\beta_M$ des Messthermistors (32) und der negative Temperaturkoeffizient $\beta_C$ des Kompensationsthermistors bzw. der Kompensationsthermistoren (36) folgendermaßen gepaart sind:

$$0{,}65 \leq \frac{\beta_C}{\beta_M} \leq 0{,}85$$

mit, vorzugsweise:

$$\frac{\beta_C}{\beta_M} \leq 0{,}78$$

und/oder mit, vorzugsweise:

$$0{,}67 \leq \frac{\beta_C}{\beta_M}$$

12. Verfahren zur Erkennung nach einem der Ansprüche 9 bis 11, **dadurch gekennzeichnet, dass** es zusätzlich eine Verstärkung der Messpotentialdifferenz mit einem Verstärkungsverhältnis umfasst, das sich linear in Abhängigkeit vom Widerstand mindestens eines in der Referenzumgebung positionierten Verstärkungsthermistors (74) ändert.

13. Verfahren zur Erkennung nach einem der Ansprüche 9 bis 12, **dadurch gekennzeichnet, dass** die Messumgebung durch eine Leitung (29) für den Durchgang des Stroms eines flüssigen oder pastösen Produkts begrenzt ist, wobei die Positionierung des Messthermistors (32) in der Leitung (29) erfolgt und die Positionierung des oder der Kompensationsthermistoren (36) auf einem Träger (34) erfolgt, der außerhalb der Leitung (29) liegt und thermisch mit der Leitung (29) gekoppelt ist.

14. Verfahren zur Erkennung nach Anspruch 13, **dadurch gekennzeichnet, dass** das flüssige oder pastöse Produkt ein Fett ist und dass die Leitung (29) eine Schmierleitung ist, die geeignet ist, in einen Fettschmierkreislauf (10) einer Gesamtheit von einem oder mehreren mechanischen Bauteilen (12) einer Industrieanlage, einer oder mehrerer Maschinen oder eines oder mehrerer Fahrzeugteile integriert zu werden.

15. Verfahren zur Fettschmierung einer Anordnung von einem oder mehreren Bauteilen (12) einer Industrieanlage, einer oder mehrerer Maschinen oder eines oder mehrerer Fahrzeugteile, bei dem ein Durchgang von Fett in einer Schmierleitung (29) eines Schmierkreises (10) der Anordnung von einem oder mehreren Bauteilen (12) durch das Verfahren zur Erkennung nach Anspruch 14 detektiert wird.

**Claims**

1. A system (24) for detecting a flow of fluid or pasty product, comprising:

   - a measuring thermistor (32) having a negative temperature coefficient, the measuring thermistor (32) being able to be positioned in an ambient measurement environment having a given ambient temperature and to have, with respect to the ambient measurement environment, a thermal resistance which varies as a function of the presence or absence of a flow of fluid or pasty product in the ambient measurement environment, and
   - a circuit (54) for detecting time variations of a difference in measurement potential between a terminal of the measuring thermistor (32) and a reference potential,
   **characterized in that** it further comprises a current-regulated supply circuit (52) for the measuring thermistor (32), controlled by an electrical compensation dipole comprising one or more compensation thermistors (36) having an identical negative temperature coefficient connected in series or in parallel, the compensating thermistor(s) (36) being able to be positioned in a reference ambient environment (35) at the given ambient temperature, so as to deliver a supply current to the measuring thermistor (32) having an intensity which is inversely proportional to the resistance of the compensating electrical dipole (36).

2. The detection system according to claim 1, **characterized in that** the negative temperature coefficient of the measuring thermistor (32) and the negative temperature coefficient of the compensating thermistor(s) (36) are matched in such a way that, in a given ambient temperature range $T_{amb}$ between -40°C and 105°C, the difference between the voltage measurement $V_M\langle T_{amb}\rangle_{stat}$ found for a first value $\rho_{M_{stat}}$ of the thermal resistance and the voltage measurement $V_M\langle T_{amb}\rangle_{dyn}$ found for a second value of the thermal resistance $\rho_{M_{dyn}}$ between 20% and 90% of the first value $\rho_{M_{stat}}$ of the thermal resistance, is in absolute value between 50% and 150% of the difference between the voltage measurement $V_M\langle 300K\rangle_{stat}$ found at 25°C for the first thermal resistance value $\rho_{M_{stat}}$ and the voltage measurement $V_M\langle 300K\rangle_{dyn}$ found at 25°C for the second thermal resistance value $\rho_{M_{dyn}}$.

3. The detection system according to either of the preceding claims, **characterized in that** the negative temperature coefficient $\beta_M$ of the measuring thermistor (32) and the negative temperature coefficient $\beta_C$ of the compensating thermistor(s) (36) are matched such that:

$$0.65 \leq \frac{\beta_C}{\beta_M} \leq 0.85$$

preferably with:

$$\frac{\beta_C}{\beta_M} \leq 0.8$$

and/or preferably with:

$$0.7 \leq \frac{\beta_C}{\beta_M}$$

4. The detection system according to any one of the preceding claims, **characterized in that** the circuit (54) for detecting variations of a difference in measurement potential between a terminal of the measuring thermistor (32) and a reference potential is a differentiator circuit, preferably of first order.

5. The detection system according to any one of the preceding claims, **characterized in that** it further comprises an auxiliary circuit (68) for amplifying the difference in potential measurement, comprising at least one amplification thermistor (74) having a negative temperature coefficient, the amplification thermistor (74) being able to be positioned in the ambient reference environment, the auxiliary amplification circuit having an amplification ratio varying linearly as a function of the resistance of the amplification thermistor (74).

6. The detection system according to any one of the preceding claims, **characterized in that** it further comprises a conduit (29) for passage of the flow of fluid or pasty product, delimiting the ambient measuring environment in which the measuring thermistor (32) is positioned, and a support (34) external to the conduit (29), on which the compensation thermistor (36) is positioned, the external support (34) being thermally coupled to the conduit (29).

7. The detection system according to claim 6, **characterized in that** the fluid or pasty product is a grease, and **in that** the conduit (29) is a grease conduit suitable for integration into a grease lubrication circuit (10) of a set of one or more mechanical components (12) of an industrial facility of one or more machines, or of one or more vehicle components.

8. A grease lubrication circuit (10) for an assembly of one or more components (12) of an industrial facility, one or more machines, or one or more vehicle parts, comprising a detection system (24) according to claim 7, the lubrication conduit (29) of the detection system being integrated into the grease lubrication circuit (10).

9. A method of detecting a flow of fluid or pasty product, comprising:

   - positioning a measuring thermistor (32) having a negative temperature coefficient in an ambient measuring environment having a given ambient temperature, the measuring thermistor (32) being capable of having, relative to the ambient measuring environment, a thermal resistance which varies as a function of the presence or absence of a flow of fluid or pasty product in the ambient measuring environment, and
   - measuring a time variation of a difference in measurement potential between a terminal of the measuring thermistor (32) and a reference potential, **characterized in that** it further comprises:
   - positioning an electrical dipole comprising one or more compensation thermistors (36) having an identical negative temperature coefficient connected in series or in parallel, in a reference ambient environment (35) at the given ambient temperature,
   - supplying the measuring thermistor (32) with a regulated supply current having an intensity inversely proportional to the electrical resistance of the compensation dipole (36).

10. The detection method according to claim 9, **characterized in that** the negative temperature coefficient of the measuring thermistor (32) and the negative temperature coefficient of the compensating thermistor(s) (36) are matched in such a way that in a given ambient temperature range $T_{amb}$ between -40°C and 105°C, the difference between the voltage measurement $V_M(T_{amb})_{stat}$ found for a first value $\rho_{M_{stat}}$ of the thermal resistance and the voltage measurement $V_M(T_{amb})_{dyn}$ found for a second value of the thermal resistance $\rho_{M_{dyn}}$, between 20% and 90% of the first value $\rho_{M_{stat}}$ of the thermal resistance, is in absolute value between 50% and 150% of the difference between the voltage measurement $V_M(300K)_{stat}$ found at 25°C for the first thermal resistance value $\rho_{M_{stat}}$ and the voltage measurement $V_M(300K)_{dyn}$ found at 25°C for the second thermal resistance value $\rho_{M_{dyn}}$.

11. The detection method according to either one of claims 9 to 10, **characterized in that** the negative temperature coefficient $\beta_M$ of the measuring thermistor (32) and the negative temperature coefficient $\beta_C$ of the compensating thermistor(s) (36) are matched such that:

$$0.65 \leq \frac{\beta_C}{\beta_M} \leq 0.85$$

preferably with:

$$\frac{\beta_C}{\beta_M} \leq 0.78$$

and/or preferably with:

$$0.67 \leq \frac{\beta_C}{\beta_M}$$

12. The detection method according to any one of claims 9 to 11, **characterized in that** it further comprises amplifying the difference in measuring potential with an amplification ratio varying linearly as a function of the resistance of at least one amplification thermistor (74) positioned in the reference ambient environment.

13. The detection method according to any one of claims 9 to 12, **characterized in that** the ambient measurement environment is delimited by a conduit (29) through which the flow of fluid or pasty product passes, the measuring thermistor (32) being positioned in the conduit (29), the compensation thermistor(s) (36) being positioned on a support (34) external to the conduit (29) and thermally coupled to the conduit (29).

14. The detection method according to claim 13, **characterized in that** the fluid or pasty product is a grease, and **in that** the conduit (29) is a grease conduit integrated into a grease lubrication circuit (10) of a set of one or more components (12) of an industrial facility, one or more machines or one or more vehicle components.

15. A method of grease lubrication of an assembly of one or more components (12) of an industrial facility, one or more machines or one or more vehicle components, wherein a passage of grease in a grease conduit (29) of a lubrication circuit (10) of the assembly of one or more components (12) is detected by the detection method of claim 14.

## Fig 1

## Fig 2

## Fig 3

Fig 4

Fig 5

Fig 6

Fig 7

Fig 8

Fig 9

Fig 10

Fig 11

Fig 12

Fig 13

**EP 3 935 348 B1**

## RÉFÉRENCES CITÉES DANS LA DESCRIPTION

**Documents brevets cités dans la description**

- US 20170254686 A

- US 4413514 A